# FASCICULE DE BREVET EUROPEEN

(11) **EP 4 588 119 B1**
(45) Date de publication et mention de la délivrance du brevet: **18.11.2026**
(21) Numéro de dépôt: 23767858.6
(22) Date de dépôt: 06.09.2023
(51) Int. Cl.: H01M 10/0565, H01M 10/0525, C08G 75/02, C08G 75/045, H01M 4/04

(54) **ÉLECTROLYTE SOLIDE RÉTICULÉ POUR BATTERIE LITHIUM-ION**
VERNETZTER FESTSTOFFELEKTROLYT FÜR LITHIUM-IONEN-BATTERIE
CROSSLINKED SOLID ELECTROLYTE FOR LITHIUM-ION BATTERY

(30) Priorité: 12.09.2022 FR 2209113
(43) Date de publication de la demande: 23.07.2025
(73) Titulaire: IFP Energies nouvelles, 92500 Rueil-Malmaison (FR)
(72) Inventeur: OBADIA, Mona Marie, 92852 RUEIL-MALMAISON CEDEX (FR); HALTTUNEN, Niki, 92852 RUEIL-MALMAISON CEDEX (FR); BRACCO, Emmanuelle, 92852 RUEIL-MALMAISON CEDEX (FR); PASQUIER, David, 92852 RUEIL-MALMAISON CEDEX (FR)
(74) Mandataire: IFP Energies nouvelles
(86) Numéro de dépôt international: PCT/EP2023/074358
(87) Numéro de publication internationale: WO 2024/056470

(56) Documents cités:
- CN-B- 106 935 904
- CN-B- 110 172 115
- US-A1- 2020 099 089
- J. ZHANG ET AL: "Lithium (4-styrenesulfonyl) (trifluoromethanesulfonyl) imide based single-ion polymer electrolyte with superior battery performance", ENERGY STORAGE MATERIALS, vol. 24, 21 June 2019 (2019-06-21), pages 579 - 587, XP055974314, ISSN: 2405-8297, DOI: 10.1016/j.ensm.2019.06.029
- R.L. WEBER ET AL: "Thiol-ene synthesis and characterization of lithium bis(malonato)borate single-ion conducting gel polymer electrolytes", SOFT MATTER, vol. 13, no. 41, 6 October 2017 (2017-10-06), pages 7633 - 7643, XP093041881, ISSN: 1744-683X, DOI: 10.1039/C7SM01738C

## Description

### Domaine technique

L'invention concerne la préparation d'électrolytes solides réticulés pour batteries lithium-ion à base de réactions thiol-ène.

### Technique antérieure

La réaction thiol-ène a des applications dans de nombreux domaines dont les batteries.

La réaction thiol-ène (également hydrothiolation d'alcène) est une réaction entre un thiol et un alcène pour former un thioéther. Cette réaction a été signalée pour la première fois en 1905, mais elle a pris de l'importance à la fin des années 1990 et au début des années 2000 pour sa faisabilité et son large éventail d'applications, notamment pour les électrolytes.

Les thiols sont d'excellents nucléophiles par la formation d'anions thiolate (RS-) et sont également des électrophiles via les radicaux thiyls (RS*). L'une des réactions les plus étudiées mettant en jeu des thiols est l'hydrothiolation de doubles liaisons (C=C). Selon la nature des substituants de la double liaison, donneurs ou accepteurs d'électrons, et le type de catalyseur employé, la réaction thiol-C=C peut se produire suivant un mécanisme radicalaire ou nucléophile.

Dans le cas d'un mécanisme nucléophile, la réaction utilisée est une polyaddition de Michael aussi appelée « thiol-ène nucléophile » sur une double liaison substituée par un groupement électroattracteur, tels que les (méth)acrylates (monomères contenant une double liaison active), et une base nucléophile est utilisée comme catalyseur.

La réaction de polyaddition de Michael a des applications dans de nombreux domaines.

Li et al. ACS Energy Letters 2018, vol. 3, p. 20-27. DOI : 10.1021/acsenergylett.7b00999 proposent un électrolyte solide polymère à ion unique («single-ion») synthétisé à partir d'une réaction de chimie clic photo-induite, d'un azoture avec un alcyne. Il présente une unité de répétition PEG (poly(oxyde d'éthylène)) et un contre-anion TFSI (bis{(trifluorométhyl) sulfonyl} imide), fixé à la chaîne polymère. Aucun réticulant n'est utilisé, des polymères liquides visqueux sont obtenus et non des réseaux (les propriétés mécaniques et physico-chimiques sont donc totalement différentes). Bien que le nombre de transport soit proche de 1, les valeurs de conductivité décrites à 90 °C sont de l'ordre de 2.10⁻⁵ S.cm⁻¹.

Shen et al. ChemElectroChem 2019, vol. 6, 4483-4490. DOI : 10.1002/celc.201901045 proposent un électrolyte quasi-solide sous la forme d'un réseau semi-interpénétré formé par un polymère réticulé à ion unique («single-ion») à base polyacrylate et une matrice PEO, donc sans aucun lien avec la réaction thiol-ène. Le contre-anion est ici un sulfonate. Une conductivité de 1,34. 10⁻⁵ S.cm⁻¹ à 60 °C est observée grâce à l'ajout de 5 µL de plastifiant (EC:PC 1:1 vol) au niveau de l'interface cathode-électrolyte au moment du montage de la pile bouton. Le nombre de transport est de 0,77.

Du et al. ACS Appl. Energy Mater. 2020, vol. 3, 1128-1138. DOI : 10.1021/acsaem.9b02180 proposent un électrolyte à ion unique («single-ion») quasi-solide issu de l'enduction en phase solvant d'un mélange de PVDF et d'un polyimide à ion unique («single-ion»). Le contre-anion est un TFSI, mais l'électrolyte obtenu est un réseau physique et non chimique, de plus la synthèse n'implique pas de réaction thiol-ène. Il présente une très bonne conductivité de 1,6.10⁻⁴ S.cm⁻¹ à 25 °C grâce à l'immersion préalable de celui-ci dans des solvants carbonatés lors de sa caractérisation électrochimique. Cependant, la présence de solvant est un frein au développement industriel de ce type de matériaux, puisque l'objectif est d'utiliser un électrolyte solide justement pour éviter les problèmes thermiques liés aux solvants dans les batteries (évaporation, montée en pression, risque d'inflammation). Le nombre de transport est de 0,93.

Zhang et al. Energy Storage Materials 2020, vol. 24, p. 579-587. DOI : 10.1016/j.ensm.2019.06.029 proposent un électrolyte à ion unique («single-ion») quasi-solide issu d'une réaction de thiol-ène photo-induite à partir d'un mélange de quatre monomères dissous dans de l'acétonitrile, déposé sur un non-tissé de polypropylène. Le contre-anion est un TFSI et le réticulant thiol est un pentaérythritol tétrakis(3-mercaptopropionate). Les auteurs utilisent un solvant dans le mélange de départ, et un support. De plus, on note que la membrane obtenue est plongée dans un mélange éthylène carbonate et de diméthylène carbonate avant d'être caractérisée. L'excellente conductivité de 8,4. 10⁻⁴ S.cm⁻¹ à 25 °C n'est donc pas intrinsèque au matériau. De plus le réseau présenté ne contient pas de segments PEO qui facilitent la conduction ionique en absence d'une quantité importante de solvant.

Les brevets CN 106935904 B et CN 110172 115 B divulguent des procédés de préparation d'électrolytes solides réticulés pour batteries secondaires au lithium, ces procédés étant basés sur une réaction thiol-ène impliquant une molécule hydrocarbonée qui comporte au moins trois fonctions thiol et un composé qui contient au moins une fonction alcène.

La demande de brevet US 2020/099089 A1 décrit une composition d'électrolyte solide comprenant un conducteur ionique constitué d'un polymère (A) ayant un poids moléculaire moyen en masse de 5 000 ou plus et d'un sel électrolytique (B) contenant un ion d'un métal appartenant au groupe I ou II du tableau périodique. Elle inclut également un composé (C) possédant deux ou plusieurs groupes de doubles liaisons carbone-carbone, ainsi qu'un composé (D) ayant deux ou plusieurs groupes sulfanyle. Par ailleurs, US 2020/099089 A1 mentionne une feuille contenant un électrolyte solide, une batterie secondaire à l'état solide, ainsi que des procédés de fabrication associés, notamment pour la feuille contenant un électrolyte solide et pour la batterie secondaire à l'état solide.

La publication de Weber et al. (Soft Matter vol. 13 no.41, 2017, 7633-7643) décrit un travail de recherche visant à développer des électrolytes polymères avancés pour des batteries lithium-ion de nouvelle génération. Dans cette étude, les chercheurs ont synthétisé un nouveau monomère, le lithium bis(non-8-enyl-malonato)borate (LiBNMB), via un processus en trois étapes. Ce monomère, de type α,ω-diène, subit une polymérisation croisée thiol-ène initiée thermiquement dans du carbonate de propylène pour produire des électrolytes polymères en gel présentant une forte concentration en ions lithium (environ 0,9 M).Les demandes de brevets US 2016/0315348 A1 J. R. Long, J. Van Humbeck, R. P. Ameloot *Polymer networks single ion conductors* et US 2018/0166744 A1 R. Long, J. Van Humbeck, J. C. Axelson *Polymer networks single ion conductors with flexible linkers* décrivent des réseaux polymères à ion unique («single-ion») basés sur l'anion borate (C₆F₄)₄B⁻. Ce sont les anions tétrafluorophényl borate qui forment les nœuds et le réticulant neutre qui donne plus ou moins de souplesse mécanique selon sa structure chimique. Le réticulant, qui sert donc aussi d'espaceur, présenté comme le plus intéressant est le cis-2-butène-1,4-diol, car il permet d'obtenir une bonne flexibilité structurelle. La réaction de formation du réseau s'opère en deux étapes : la déprotonation du cis-2-butène-1,4-diol par le *n*-butyl lithium, puis la substitution nucléophile entre le chlorure de méthyle (issu du précurseur lithium chlorométhyl tétrafluorophényl borate) et le cis-2-butène-1,4-diol déprotoné. La membrane finale est obtenue par enduction en utilisant les solvants *N,N*-diméthylformamide et 2,2'-Azobis(2-methylpropionitrile). On note que le module d'Young (E = 0,27 GPa) et la conductivité ionique (σ = 8,5. 10⁻⁵ S.cm⁻¹ à 40 °C) sont donnés pour une membrane contenant 30 % massique de plastifiant. Ainsi, les exemples de ces brevets ne portent que sur des gels contenant une quantité très importante de carbonate de propylène.

### Résumé de l'invention

De manière surprenante, la Demanderesse a remarqué que, dans des formulations non aqueuses d'électrolytes solides, la réticulation améliorait les propriétés mécaniques du réseau par rapport à l'utilisation d'homopolymères, et que l'utilisation d'une molécule hydrocarbonée portant entre 3 et 6 fonctions thiol en association avec une molécule hydrocarbonée comportant deux doubles liaisons C=C en présence d'un catalyseur de type base nucléophile, dans laquelle le rapport molaire [alcènes]/[thiols] dans la formulation est sensiblement stœchiométrique, permettait d'augmenter la résistance du réseau à une dégradation chimique. On entend par rapport molaire [alcènes]/[thiols], le rapport molaire de l'ensemble des doubles liaisons C=C sur l'ensemble des liaisons thiol de la formulation.

La formulation d'électrolyte selon l'invention permet notamment d'obtenir des conductivités de plusieurs ordres de grandeur supérieures à celles obtenues dans l'art antérieur (10⁻⁵ à 10⁻⁷ S/cm). La formulation d'électrolyte réticulable selon l'invention permet d'obtenir un réseau chimique auto-supporté avec un nombre de transport de 1 qui peut être synthétisé en une seule étape par une réaction thiol-ène et sans que l'utilisation de solvant ne soit forcément nécessaire.

L'invention concerne une formulation d'électrolyte réticulable comprenant au moins :
- Une molécule hydrocarbonée comportant trois à six fonctions thiol, de préférence quatre ;
- Un extenseur de chaîne bifonctionnel sous forme d'une chaîne hydrocarbonée portant deux doubles liaisons C=C ;
   Un termineur de chaîne à ion unique («single-ion») monofonctionnel comportant une double liaison C=C et comprenant du lithium mobile ;
- Un termineur de chaîne de type polyéthylène glycol monofonctionnel ;
- Un catalyseur de type base nucléophile,
dans laquelle le rapport molaire [doubles liaisons C=C]/[thiols] est de 1.

La formulation peut comprendre un sel de lithium ou un mélange de sels de lithium soluble(s) dans la formulation ; la quantité de sel(s) de lithium peut représenter entre 2 et 30 % en masse par rapport à la masse de formulation totale, de préférence entre 5 et 15% en masse par rapport à la masse de formulation totale.

Le catalyseur peut être choisi parmi le 1,8-diazobicyclo[5.4.0]undéc-7-ène, la diméthylphénylphosphine, la triphénylphosphine ou la triéthylamine, la pyridine et la diméthylaminopyridine et de préférence choisi parmi le 1,8-diazobicyclo[5.4.0]undéc-7-ène, la diméthylphénylphosphine, la triphénylphosphine ou la triéthylamine, de manière très préférée le catalyseur est la triéthylamine.

La molécule hydrocarbonée comportant 3 à 6 fonctions thiol peut être choisie parmi le pentaérythritol tétrakis(3-mercaptopropionate), le triméthylolpropane tris(3-mercaptopropionate), un poly(mercaptopropyl)méthylsiloxane) ou un copolymère (mercaptopropyl)méthylsiloxane) -co-diméthylsiloxane de fonctionnalité moyenne supérieure ou égale à 3, de préférence est le pentaérythritol tétrakis(3-mercaptopropionate). L'extenseur de chaîne bifonctionnel peut être choisi parmi toute unité oligo-éthylène glycol portant deux doubles liaisons C=C ou toute unité norbornène, vinyl éther, allyl éther, acrylate, méthacrylate, alcène.

L'extenseur de chaîne bifonctionnel peut être choisi parmi le poly(éthylène glycol)diméthacrylate, le PEG diacrylate, le PEG diallyl, le PEG divinyl.

Le termineur de chaîne à ion unique monofonctionnel est de préférence le lithium-3-((trifluorométhane) sulfonamidosulfonyl) propyl méthacrylate.

Le termineur de chaîne polyéthylène glycol peut être choisi parmi le poly(éthylène glycol) méthyléther acrylate, le poly(éthylène glycol) allyl méthyléther, le poly(éthylène glycol) vinyl méthyléther ou le poly(éthylène glycol) maléimide méthyléther.

Le catalyseur peut être présent en quantité telle que le ratio molaire fonctions thiol sur catalyseur soit compris entre 200 et 600.

La formulation peut comprendre un deuxième extenseur de chaîne de la famille des dithiols, de préférence choisi parmi les polymères polydiméthylsiloxane (PDMS) ou polyéthylèneglycol (PEG) terminés par des fonctions mercaptoéthyl ou mercaptopropyl à ses deux extrémités.

La formulation peut comprendre un plastifiant choisi parmi les composés suivants : oligo-éthylène glycol, ester de carbonate, succinonitrile, solvant polaire aprotique ou liquide ionique aprotique, ledit plastifiant représentant de 2 à 30%, de préférence de 5 à 15 % massique par rapport à la masse totale de formulation.

L'invention concerne également un procédé de préparation d'un électrolyte solide réticulé dans lequel :
a) on réticule la formulation d'électrolyte réticulable selon l'une quelconque des variantes précédentes, en présence éventuelle d'un solvant non aqueux, au moyen du catalyseur présent dans la formulation et par activation thermique pour former un polymère conducteur des ions lithium,
b) on évapore le solvant éventuel présent dans ledit polymère afin d'obtenir un électrolyte solide réticulé.

L'activation thermique peut être effectuée par chauffage de la formulation à une température comprise entre 50 et 80°C pendant une durée comprise entre 1 et 24 heures et préférentiellement entre 6 heures et 12 heures.

L'invention concerne également la préparation d'un électrolyte solide réticulé sous forme d'électrode dans lequel à l'étape a), on imprègne une électrode poreuse par la formulation d'électrolyte réticulable par enduction ou pulvérisation, puis on réticule la formulation enduite ou pulvérisée, ou on ajoute dans la formulation d'électrolyte réticulable à l'étape a) une matière active et un percolant électronique pour formuler une encre d'électrode qui est enduite, puis réticulée pour obtenir une électrode solide.

L'invention concerne enfin l'utilisation de l'électrolyte réticulé obtenu par réticulation de la formulation selon l'une quelconque de ses variantes ou obtenu par le procédé selon l'une quelconque de ses variantes comme électrolyte solide de batterie Li-ion tout solide ou comme composant de l'électrode positive (posolyte ou catholyte) ou négative (négolyte ou anolyte) d'un système électrochimique.

### Liste des figures

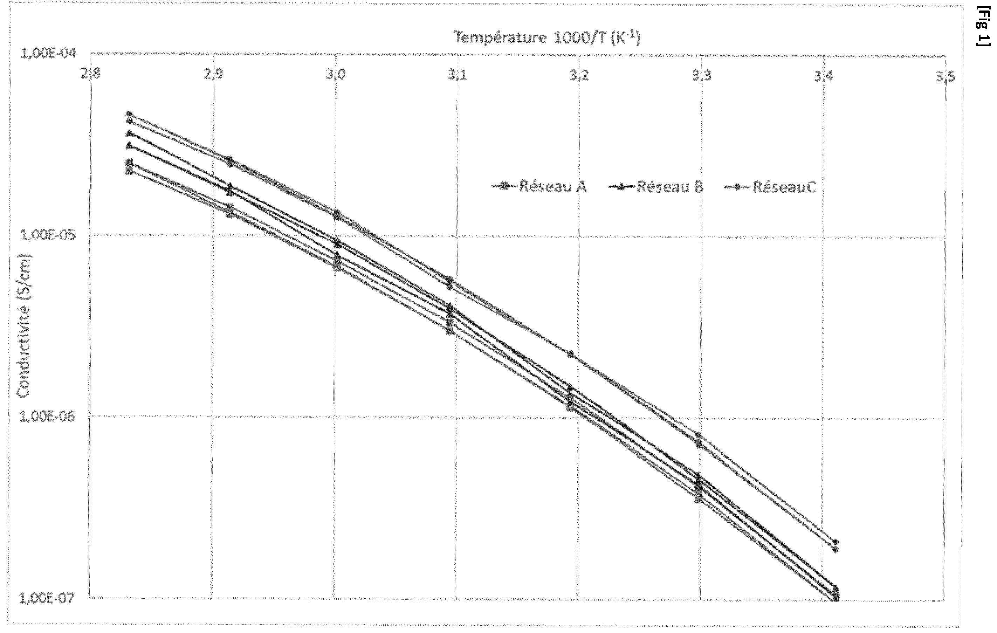

La figure 1 représente la conductivité (S/cm) en fonction de l'inverse de la température (1000/T avec T en K) pour un cycle (descente-montée-descente) en température entre 20 et 80°C des préparations A-B-C (selon l'invention) dans l'exemple.

### Description des modes de réalisation

### Description détaillée de l'invention

L'invention concerne une formulation d'électrolyte réticulable au moyen de réactions thiol-ène dont au moins un des monomères comporte un anion à charge délocalisée comme l'ion TFSI, lié de manière covalente et pouvant inclure un sel de lithium pour assurer un bon transport des ions lithium dans l'électrolyte et le catholyte. La formulation permet d'obtenir des électrolytes réticulés utilisés comme électrolyte solide de batterie Li-tout solide ou comme composant de l'électrode positive (posolyte ou catholyte).

L'originalité de l'invention réside dans le développement d'un électrolyte à ion unique («single-ion») polymérisé et réticulé in situ qui présente l'avantage d'être initialement liquide, de former en une seule étape un réseau chimique par une réaction thiol-ène et de présenter des propriétés de transport des ions lithium intéressantes pour l'application, même sans nécessiter de solvant. La formulation réticulable selon l'invention est particulièrement intéressante pour la préparation d'électrodes de batterie tout solide. En effet, on peut utiliser des électrodes préparées selon les procédés usuels et les immerger avec les précurseurs de la formulation selon l'invention pour former in situ un réseau de percolation ionique avec de bonnes interfaces avec les matières actives.

Dans la suite de la description on appelle polymère « à ion unique («single-ion») » un polymère à blocs auto-dopés ou polymère à conduction unipolaire.

Les constituants de départ, tous liquides, sont :
- Une molécule comprenant 3 à 6 fonctions thiol, de préférence quatre, qui joue le rôle d'agent de réticulation : une molécule tétrafonctionnelle (**A₄**) peut notamment être le pentaérythritol tétrakis(3-mercaptopropionate) (préférentiellement), mais un thiol trivalent (**A₃**) comme le triméthylolpropane tris(3-mercaptopropionate) peut être utilisé, ou encore un poly(mercaptopropyl)méthylsiloxane) ou un copolymère (mercaptopropyl)méthylsiloxane) diméthylsiloxane de fonctionnalité moyenne supérieure ou égale à 3.
- Un extenseur de chaîne bifonctionnel pouvant être choisi parmi toute chaine oligo- ou poly(ethylène glycol) portant 2 doubles liaisons C=C (**B₂**) : l'extenseur de chaîne bifonctionnel peut ainsi être un méthacrylate, souvent plus stables que les acrylates, notamment le poly(éthylène glycol)diméthacrylate (préférentiellement). Plus généralement, l'extenseur de chaîne bifonctionnel peut être une chaine oligo- ou poly(ethylène glycol) portant 2 doubles liaisons C=C choisie parmi les composés suivants : PEG diacrylate, PEG diméthacrylate, PEG diallyl, PEG divinyl) ou toute unité norbornène, vinyl éther, allyl éther, acrylate, méthacrylate, maléimide, alcène.
- Un termineur de chaîne à ion unique («single-ion») monofonctionnel (**B'**₁), comportant une double liaison C=C apportant le lithium mobile et le contre-anion ancré à la chaîne, pouvant notamment être le lithium-3-((trifluorométhane) sulfonamidosulfonyl) propyl méthacrylate.
- Un termineur de chaîne polyéthylène glycol monofonctionnel (**B"**₁), pouvant être choisi parmi poly(éthylène glycol) méthyléther méthacrylate, poly(éthylène glycol) méthyléther acrylate, poly(éthylène glycol) allyl méthyléther, poly(éthylène glycol) vinyl méthyléther, poly(éthylène glycol) maléimide méthyléther etc.

Il n'est pas nécessaire d'avoir la même fonction chimique sur l'extenseur de chaîne bifonctionnel (**B₂**) et sur le termineur de chaîne PEG- monofonctionnel (B₁").

Il est préférable dans la formulation d'électrolyte réticulable selon l'invention de respecter une équivalence molaire des fonctionnalités thiols et alcène (stœchiométrie égale à 1). L'originalité de la formulation selon l'invention se trouve dans le fait que la densité de réticulation du réseau et ses propriétés mécaniques et physico-chimiques sont indépendantes de la quantité de termineur de chaîne à ion unique («single-ion») (B'₁) grâce à la présence du termineur de chaîne PEG (B"₁). Il est donc facile d'ajuster la conductivité ionique du réseau en jouant sur le ratio molaire B₁'/B₁" sans changer les propriétés mécaniques de l'électrolyte.

Dans un mode de réalisation, on peut ajouter un deuxième extenseur de chaîne de la famille des dithiols (par exemple un polymère PDMS ou PEG terminé par des fonctions mercaptoéthyle ou mercaptopropyle à ses deux extrémités).

La réaction de réticulation est déclenchée par un catalyseur communément utilisé dans la réaction de polyaddition de Michael, également appelé initiateur, de type base nucléophile. Le catalyseur peut être choisi parmi le 1,8-diazobicyclo[5.4.0]undéc-7-ène, la diméthylphényl phosphine, la triphényl phosphine, la triéthylamine, la pyridine ou encore la diméthylaminopyridine, et de manière préférée le 1,8-diazobicyclo[5.4.0]undéc-7-ène, la diméthylphényl phosphine, la triphényl phosphine ou la triéthylamine, de manière encore plus préférée le catalyseur est la triéthylamine. Avantageusement on utilise un ratio molaire fonction thiol sur catalyseur compris entre 200 et 600, ce qui correspond notamment à un ratio molaire réticulant tétrafonctionnel sur catalyseur d'environ 50 à 150, lorsque la molécule comprenant les thiols est tétrafonctionnelle (4 fonctions thiol).

La formulation d'électrolyte réticulable selon l'invention comprend donc au moins les constituants suivants :
- Une molécule portant de trois à six fonctions thiol, par exemple quatre fonctions thiol (le pentaérythritol tétrakis(3-mercaptopropionate) dans les exemples), ou trois ou six si l'on veut faire varier la souplesse du matériau final,
- Un extenseur de chaîne portant 2 doubles liaisons C=C (le poly(éthylène glycol) diméthacrylate dans les exemples) : l'extenseur de chaîne est avantageusement choisi parmi toute unité oligo-éthylène glycol portant deux doubles liaisons C=C ou toute unité norbornène, vinyl éther, allyl éther, acrylate, méthacrylate, maléimide, alcène,
- Un termineur de chaîne à ion unique («single-ion») monofonctionnel portant 1 double liaison C=C qui apporte le lithium mobile et le contre-anion ancré, c'est-à-dire lié de manière covalente, à la chaîne et permet de générer des chaines pendantes donc une souplesse mécanique (le lithium-3-((trifluorométhane) sulfonamidosulfonyl) propyl méthacrylate dans les exemples),
- Un termineur de chaîne monofonctionnel polyéthylène glycol,
- Un catalyseur de type base nucléophile (la triéthylamine dans les exemples) :
   ∘ La quantité de catalyseur à utiliser est avantageusement de l'ordre de 0,04 équivalent molaire, le choix de la quantité exacte pouvant être ajustée par l'homme du métier.

Dans un mode de réalisation de l'invention, la formulation réticulable d'électrolyte comprend :
- du pentaérythritol tétrakis(3-mercaptopropionate) (**A₄**) ;
- du poly(éthylène glycol)diméthacrylate (**B₂**) ;
- du lithium-3-((trifluorométhane) sulfonamidosulfonyl) propyl méthacrylate (**B'**₁),
- du poly(éthylène glycol) méthyléther méthacrylate (**B"**₁),
- de la triéthylamine comme catalyseur, avec de préférence un ratio molaire réticulant tétrafonctionnel (**A4**) sur catalyseur compris entre 50 et 150.

De manière optionnelle, il est aussi envisageable d'ajouter un sel de lithium soluble dans la formulation de départ ou un mélange de plusieurs sels solubles dans la formulation de départ. Le ou les sel(s) de lithium soluble(s) dans la formulation de départ sont choisis de préférence parmi LiTFSi, LiPF₆, LiFSI, LiClO₄, LiTDI, de manière très préférée le sel de lithium soluble est le LiTFSi, ou tout mélange de plusieurs sels de lithium solubles dans la formulation de départ. La quantité exacte de sel de lithium soluble peut être comprise entre 2 et 30 % massique de la formulation de départ et préférentiellement entre 5 et 15 % massique.

Il est également possible d'ajouter un plastifiant, choisi parmi les composés suivants : oligo-éthylène glycol, carbonates d'alkyle, succinonitrile, solvant aprotique polaire peu volatil ou un liquide ionique aprotique. La quantité de plastifiant peut être comprise entre 2 % et 30 % massique de la formulation de départ et préférentiellement entre 5 % et 15 % massique.

La formulation liquide réticulable selon l'invention peut être mise en forme entre deux plaques ou par enduction ou pulvérisation sur un support, puis la réticulation menant au réseau se fait par chauffage à une température comprise entre 50 et 80 °C pendant une durée comprise entre 1 et 24 heures et de préférence entre 6 et 12 heures. Les catholytes ou anolytes peuvent être mis en forme par imprégnation d'une électrode poreuse par la formulation liquide (enduction ou pulvérisation) ou par mélange de la formulation liquide avec de la matière active pour former une encre, avec éventuellement présence d'un solvant qui sera évaporé après la réticulation.

Dans le cas où l'électrolyte solide est en contact avec l'électrode positive, la formulation réticulable selon l'invention à l'état liquide peut être enduite ou pulvérisée sur une électrode positive déjà préparée selon les protocoles de l'homme du métier afin que la formulation liquide mouille la porosité de l'électrode. Enfin, la réticulation est obtenue après amorçage thermique. D'une manière préférée, la formulation est enduite, ou pulvérisée, puis réticulée avant le calandrage de l'électrode.

Par exemple, les formulations selon l'invention peuvent être utilisées pour formuler une encre d'électrode positive (cathode), en ajoutant notamment dans la formulation la matière active (par exemple un oxyde mixte nickel manganèse cobalt lithié ou un phosphate de fer lithié) et un percolant électronique. Cette encre, une fois enduite et séchée, peut constituer une électrode positive solide.

### Techniques de caractérisation

La conductivité ionique d'un électrolyte est mesurée en S/cm et caractérise la capacité de l'électrolyte à transporter des ions.

La conductivité ionique de l'électrolyte est mesurée par spectroscopie d'impédance électrochimique dans une cellule Biologic^{®} CESH. La mesure est réalisée à plusieurs températures à l'aide d'une chambre thermostatée Biologic^{®} ITS. L'acquisition du spectre d'impédance se fait à l'aide d'un potentiostat Biologic^{®} MTZ 35 entre 30 MHz et 0,1 Hz autour de 0 V et avec une amplitude de ± 10 mV. La valeur de conductivité peut être déterminée par ajustement de la courbe avec un circuit équivalent du type (R1 + R2//CPE1 + CPE2) ou visuellement en prenant la valeur de la partie réelle de l'impédance Re(Z) au minimum atteint par la courbe entre le demi-cercle et la demi-droite correspondant à la partie capacitive sur le diagramme de Nyquist.

Le nombre de transport cationique (t+) correspond à la fraction de la conductivité totale liée au transport de charges par les cations et est caractérisé par spectroscopie d'impédance sur un échantillon monté entre deux électrodes non bloquantes (en lithium métal) à 60°C avec un potentiostat Biologic VMP3 entre 1 MHz et 0,1 mHz autour de 0 V avec une amplitude de 10 mV. Le nombre de transport est obtenu par ajustement d'un circuit équivalent (R1 + R2//CPE2 + R3//CPE3 + Wd1) puis par application de la formule : t+ = R₂/(R_{Wd1} + R₂). Cette méthode de mesure correspond à la méthode dite de « Watanabe » (Solid State lonics 28-30 (1988) 911-917).

Le test de gonflement en solvant et le calcul de la fraction soluble sont des méthodes classiques de caractérisation des réseaux polymères afin d'avoir une estimation indirecte de leur densité de réticulation ainsi que de leur stabilité chimique. Après immersion d'environ 300 mg d'échantillon de réseau polymère pendant 72 heures à température ambiante dans un large excès de chloroforme (CHCl₃), les échantillons gonflés sont pesés et ensuite séchés sous vide.

La fraction soluble (ws) est calculée avec l'équation suivante : $ws = 1 - {m}_{d} / {m}_{0}$ avec m₀ la masse initiale de l'échantillon gonflé de solvant (estimée par régression linéaire sur la courbe des masses mesurées à intervalles réguliers de 0,5 à 5 minutes après avoir retiré l'échantillon du solvant) et md la masse de celui-ci après extraction de la fraction soluble et séchage.

Le taux de gonflement, qui correspond au gain en volume du réseau après immersion dans le solvant, (1/q₂) est calculé avec l'équation suivante : $1 / {q}_{2} = {ρ}_{p} \left({q}_{1}-1\right) / {ρ}_{s}$ où q₁ est le ratio des masses échantillon gonflé sur échantillon sec, ρₛ est la masse volumique du solvant (ρₛ = 1,492 g.cm⁻³ pour CHCl₃) et ρₚ la masse volumique du réseau polymère.

Différentes techniques permettent de caractériser les propriétés thermo-mécaniques des réseaux polymères à ion unique («single-ion»).

La calorimétrie différentielle à balayage (DSC pour *Differential Scanning Colorimetry*) est une technique qui permet de caractériser les processus thermochimiques, notamment les transitions de phase et les changements d'état. Elle est ici utilisée pour déterminer les températures de transition vitreuse (*T_{g}*) des réseaux polymère obtenus.

Les expériences de calorimétrie différentielle à balayage (DSC) ont été réalisées avec un appareillage de type DSC Q200 (TA Instruments) calibré avec un étalon d'indium. Les échantillons (5 à 10 mg) ont été préparés à l'aide de capsules hermétiques et mesurés sous un flux d'hélium de 25 mL.min⁻¹. Les échantillons ont tout d'abord été chauffés à 120 °C avec une vitesse de chauffe de 10 °C.min⁻¹ puis maintenus à cette température pendant 2 min. Ensuite, la température a été amenée à -80 °C avec une vitesse de refroidissement de 10 °C.min⁻¹ avant de chauffer à nouveau, après un isotherme de 2 min, jusqu'à 200 °C avec une vitesse de chauffe de 10 °C.min⁻¹. Les températures de transition vitreuse (*T_{g}*) ont été mesurées à la mi-hauteur des transitions apparaissant durant la seconde chauffe à l'aide du logiciel TA Thermal Analysis.

L'analyse thermogravimétrique est une technique qui permet de caractériser le profil de perte de masse d'un échantillon soumis à une variation de température. Cela caractérise les modifications chimiques des matériaux en fonction de la température par exemple une évaporation ou une dégradation chimique.

Les expériences d'analyse thermogravimétrique (ATG) ont été réalisées avec un appareillage de type TGA Q500 (TA Instruments). Une montée en température à 20 °C.min⁻¹ suivie d'un isotherme à 110 °C pendant 8 min a été effectuée pour s'affranchir de la perte de masse due à la présence d'eau. Puis un chauffage de 20 à 600 °C à une vitesse de 10 °C.min⁻¹ sous flux continu d'hélium à 60 mL.min⁻¹ a été appliqué à des échantillons d'environ 8 mg.

### Avantages de l'invention

La formulation d'électrolyte réticulable selon l'invention présente l'avantage, notamment par rapport à des polymères déjà polymérisés, d'être liquide au départ, ce qui permet d'obtenir une bonne cohésion aux interfaces avec les électrodes, notamment en raison d'un remplissage facilité de la porosité des matériaux. Le caractère ion unique («single-ion») (t+=1) conduit à une répartition homogène des ions Li+ dans le matériau et permet ainsi de supprimer le gradient de concentration d'ions dans le matériau sous champ électrique (charge et décharge d'une batterie). Ainsi les surtensions liées à la diffusion des ions Li⁺ au travers de ce matériau sont fortement réduites.

L'utilisation d'une réticulation contrôlée sur un mélange de monomères particuliers et la morphologie particulière du réseau tri-dimensionnel confèrent par ailleurs une mobilité accrue des chaînes et par conséquent une conduction ionique améliorée. Les performances de l'électrolyte solide selon l'invention reposent notamment sur le choix spécifique de certains monomères très flexibles et bons solvants des ions lithium et par une réticulation contrôlée.

Le comportement rhéologique obtenu pour les échantillons d'électrolyte réticulé selon l'invention correspond avantageusement à celui d'un polymère réticulé.

### Exemples :

### Matériel et méthodes :

Pour des soucis de simplicité de notation, les produits composant le réseau seront nommés de la manière suivante par la suite :
- pentaérythritol tétrakis(3-mercaptopropionate) : **A₄**
- poly(éthylène glycol) diméthacrylate : **B₂**
- lithium-3-((trifluorométhane) sulfonamidosulfonyl) propyl méthacrylate **B'₁**
- poly(éthylèneglycol) méthyléther méthacrylate : **B"₁**
- triéthylamine : Et₃N

L'équivalence molaire des fonctionnalités est telle que 2 A₄ = 2 B₂ + 2 (B'₁ + B"₁).

Le mélange liquide de départ est déposé entre deux plaques de verre recouverte de scotch Teflon et séparées par un film de PTFE de 200 µm d'épaisseur dans le cas des mesures de conductivité ionique et nombre de transport, et de 2 mm d'épaisseur dans le cas des caractérisations thermo-mécaniques. Le dispositif est placé 12 h à l'étuve à 60 °C. Les échantillons solides obtenus sont séchés sur Buchi avant d'être caractérisés.

Le test de gonflement en solvant et le calcul de la fraction soluble sont des méthodes classiques de caractérisation des réseaux polymères afin d'avoir une estimation indirecte de leur densité de réticulation, ainsi que de leur stabilité chimique. Ces mesures sont effectuées après immersion d'environ 300 mg de réseau pendant 72 heures à température ambiante dans un large excès de chloroforme (CHCl₃). Les réseaux gonflés sont pesés et ensuite séchés sous vide. Le taux d'insolubles est calculé avec l'équation suivante : $Ti = \left({m}_{d}/{m}_{0}\right) \times 100$ avec m₀ la masse initiale de l'échantillon et m_{d} la masse de celui-ci après extraction de la fraction soluble et séchage.

Le taux de gonflement (1/q₂) est calculé avec l'équation suivante : $1 / {q}_{2} = {ρ}_{p} \left({q}_{1}-1\right) / {ρ}_{s}$ où q₁ est le ratio des masses échantillon gonflé sur échantillon sec, ρₛ est la masse volumique du solvant (ρₛ = 1,492 g.cm⁻³ pour CHCl₃) et ρₚ la masse volumique du réseau polymère (ρₚ ≈ 1).

Les propriétés thermo-mécaniques des réseaux polymères à ion unique («single-ion») sont caractérisées par DSC, ATG et DMA afin de déterminer respectivement la valeur de la transition vitreuse *T*_{g}, la valeur de la température de dégradation pour 10 %m de perte *T*_{d10} et les valeurs de module de conservation E' au plateau caoutchoutique et de température de transition alpha *T*_{α}.

Les expériences de calorimétrie différentielle à balayage (DSC) ont été réalisées avec un appareillage de type DSC Q200 (TA Instruments) calibré avec un étalon d'indium. Les échantillons (5 à 10 mg) ont été préparés à l'aide de capsules hermétiques et mesurés sous un flux d'hélium de 25 mL.min⁻¹. Les échantillons ont tout d'abord été chauffés à 120 °C avec une vitesse de chauffe de 10 °C.min⁻¹ puis maintenus à cette température pendant 2 min. Ensuite, la température a été amenée à -80 °C avec une vitesse de refroidissement de 10 °C.min⁻¹ avant de chauffer à nouveau, après un isotherme de 2 min, jusqu'à 200 °C avec une vitesse de chauffe de 10 °C.min⁻¹. Les températures de transition vitreuse (*T_{g}*) ont été mesurées à la mi-hauteur des transitions apparaissant durant la seconde chauffe à l'aide du logiciel TA Thermal Analysis.

Les expériences d'analyse thermogravimétrique (ATG) ont été réalisées avec un appareillage de type TGA Q500 (TA Instruments). Une montée en température à 20 °C.min⁻¹ suivie d'un isotherme à 110 °C pendant 8 min a été effectuée pour s'affranchir de la perte de masse due à la présence d'eau. Puis un chauffage de 20 à 600 °C à une vitesse de 10 °C.min⁻¹ sous flux continu d'hélium à 60 mL.min⁻¹ a été appliqué à des échantillons d'environ 8 mg.

La conductivité ionique de l'électrolyte est mesurée par spectroscopie d'impédance dans une cellule Biologic^{®} CESH. La mesure est réalisée à plusieurs températures à l'aide d'une chambre thermostatée Biologic^{®} ITS. L'acquisition du spectre d'impédance se fait à l'aide d'un potentiostat Biologic^{®} MTZ 35 entre 30 MHz et 0.1 Hz autour de 0 V et avec une amplitude de 10 mV.

Le nombre de transport des échantillons est mesuré par spectroscopie d'impédance. Les électrolytes sont disposés entre 2 électrodes de lithium métallique et caractérisés à 60 °C. L'acquisition du spectre d'impédance se fait via un potentiostat Biologic^{®} VMP3 à 0 V avec une amplitude de 10 mV entre 1 MHz et 0.1 mHz. Le spectre d'impédance est ajusté par un circuit équivalent et les résistances d'électrolyte et de diffusion peuvent alors être extraites. Le nombre de transport est calculé à partir de ces résistances.

Trois formulations ont été testées afin de faire varier les ratios molaires des quatre constituants de départ et notamment la quantité de lithium dans le réseau à ion unique («single-ion») obtenu (proportionnelle au pourcentage massique de B'₁) et afin de tester l'impact de l'ajout d'un sel de lithium (ici le LiTFSI) et d'un plastifiant (ici le succinonitrile). Le catalyseur (initiateur de type base nucléophile) est ajouté en dernier et son équivalent molaire est invariant (0,04). Le tableau 1 présente les compositions en équivalent molaire des échantillons A à C et %massique du termineur de chaîne lithié et du plastifiant dans la formulation de départ.

**Table 1**

| | **A₄** | **B₂** | **B'₁** | **B"₁** | **LiTFSI** Eq molaire | **Succinonitrile** % massique |
|---|---|---|---|---|---|---|
| A | 4 | 5 | 5 (soit 26 %m) | 1 | 0 | 0 |
| B | 4 | 5 | 6 (soit 32 %m) | 0 | 0 | 0 |
| C | 4 | 5 | 6 (soit 32 %m) | 0 | 1 | 10 |

Le Tableau 2 présente les résultats obtenus à la suite de l'immersion des réseaux dans du chloroforme à température ambiante (taux d'insolubles Ti et gonflement G des réseaux A à C). On remarque que les trois formulations conduisent à des matériaux qui ont une bonne stabilité chimique, car les taux d'insolubles sont tous supérieurs à 85 %. Les valeurs de gonflement qui sont faibles (toutes inférieures à 5) traduisent une très bonne réticulation des réseaux.

**Table 2**

| | G | Ti (%) |
|---|---|---|
| A | 4,5 | 91 |
| B | 4,3 | 87 |
| C | 3,1 | 90 |

Le Tableau 3 (Température de transition vitreuse T_{g} et température de décomposition de 10 % de la masse initiale T_{d10} des réseaux A à C) présente les résultats issus des analyses DSC et ATG. On remarque que la température de transition vitreuse est faible (elle ne dépasse pas - 15 °C) ce qui traduit d'une mobilité segmentaire adéquate pour le transport du lithium sur la plage de température d'utilisation d'une batterie. Les trois formulations testées présentent une température de décomposition de 10 % de la masse initiale supérieure à 280 °C, ce qui est tout à fait satisfaisant pour le domaine d'application visé.

**Table 3**

| | T_{g} (°C) | T_{d10} (°C) |
|---|---|---|
| A | -20 | 314 |
| B | -17 | 316 |
| C | -21 | 283 |

La Figure 1 représente les mesures de conductivité des réseaux issus des trois formulations testées A, B, C. On observe que lorsque la fraction massique de termineur de chaîne à ion unique («single-ion») augmente de 26 à 32 % massique, la conductivité du réseau final augmente aussi du fait de l'apport d'ions lithium mobiles au système (6,7.10⁻⁶ *vs* 9,5.10⁻⁶ S.cm⁻¹ à 60 °C). De plus, si on ajoute à la formulation de départ une petite quantité de sel de lithium et de plastifiant, la conductivité est encore améliorée (1,4.10⁻⁵ S.cm⁻¹ à 60 °C).

Les nombres de transport obtenus pour les formulations A et B sont égaux à un, ce qui est caractéristique d'un système à ion unique («single-ion»). Le réseau C présente un nombre de transport inférieur à 1, du fait de la présence du sel de lithium.

## Revendications

1. Formulation d'électrolyte réticulable comprenant au moins :
- Une molécule hydrocarbonée comportant trois à six fonctions thiol, de préférence quatre ;
- Un extenseur de chaîne bifonctionnel sous forme d'une chaîne hydrocarbonée portant deux doubles liaisons C=C ;
- Un termineur de chaîne à ion unique («single-ion») monofonctionnel comportant une double liaison C=C et comprenant du lithium mobile ;
- Un termineur de chaîne de type polyéthylène glycol (PEG) monofonctionnel ;
- Un catalyseur de type base nucléophile,
dans laquelle le rapport molaire [doubles liaisons C=C]/[thiols] est de 1.

2. Formulation d'électrolyte réticulable selon la revendication 1 qui comprend un sel de lithium ou un mélange de sels de lithium soluble(s) dans la formulation et dans laquelle la quantité de sel(s) de lithium représente entre 2 et 30 % en masse par rapport à la masse de formulation totale, de préférence entre 5 et 15% en masse par rapport à la masse de formulation totale.

3. Formulation d'électrolyte réticulable selon l'une des revendications précédentes dans laquelle le catalyseur est choisi parmi le 1,8-diazobicyclo[5.4.0]undéc-7-ène, la diméthylphénylphosphine, la triphénylphosphine ou la triéthylamine, la pyridine et la diméthylaminopyridine et de préférence choisi parmi le 1,8-diazobicyclo[5.4.0]undéc-7-ène, la diméthylphénylphosphine, la triphénylphosphine ou la triéthylamine, de manière très préférée la triéthylamine.

4. Formulation d'électrolyte réticulable selon l'une des revendications précédentes dans laquelle la molécule hydrocarbonée comportant 3 à 6 fonctions thiol est choisie parmi le pentaérythritol tétrakis(3-mercaptopropionate), le triméthylolpropane tris(3-mercaptopropionate), un poly(mercaptopropyl)méthylsiloxane) ou un copolymère (mercaptopropyl)méthylsiloxane)-co-diméthylsiloxane de fonctionnalité moyenne supérieure ou égale à 3, de préférence est le pentaérythritol tétrakis(3-mercaptopropionate).

5. Formulation d'électrolyte réticulable selon l'une des revendications précédentes dans laquelle l'extenseur de chaîne bifonctionnel est choisi parmi toute unité oligo-éthylène glycol portant deux doubles liaisons C=C ou toute unité norbornène, vinyl éther, allyl éther, acrylate, méthacrylate, alcène.

6. Formulation d'électrolyte réticulable selon la revendication 5 dans laquelle l'extenseur de chaîne bifonctionnel est choisi parmi le poly(éthylène glycol) (PEG) diméthacrylate, le PEG diacrylate, le PEG diallyl, le PEG divinyl

7. Formulation d'électrolyte réticulable selon l'une des revendications précédentes dans lequel le termineur de chaîne à ion unique («single-ion») monofonctionnel est le lithium-3-((trifluorométhane) sulfonamidosulfonyl) propyl méthacrylate.

8. Formulation d'électrolyte réticulable selon l'une des revendications précédentes dans lequel le termineur de chaîne polyéthylène glycol monofonctionnel est choisi parmi le poly(éthylène glycol) méthyléther acrylate, le poly(éthylène glycol) allyl méthyléther, le poly(éthylène glycol) vinyl méthyléther ou le poly(éthylène glycol) maléimide méthyléther.

9. Formulation d'électrolyte réticulable selon l'une des revendications précédentes comprenant le catalyseur en quantité telle que le ratio molaire fonctions thiol sur catalyseur soit compris entre 200 et 600.

10. Formulation d'électrolyte réticulable selon l'une des revendications précédentes comprenant un deuxième extenseur de chaîne de la famille des dithiols, de préférence choisi parmi les polymères polydiméthylsiloxane (PDMS) ou polyéthylèneglycol (PEG) terminés par des fonctions mercaptoéthyl ou mercaptopropyl à ses deux extrémités.

11. Formulation d'électrolyte réticulable selon l'une des revendications précédentes comprenant un plastifiant choisi parmi les composés suivants : oligo-éthylène glycol, ester de carbonate, succinonitrile, solvant polaire aprotique ou liquide ionique aprotique, ledit plastifiant représentant de 2 à 30%, de préférence de 5 à 15 % massique par rapport à la masse totale de formulation.

12. Procédé de préparation d'un électrolyte solide réticulé dans lequel :
a) on réticule la formulation d'électrolyte réticulable selon l'une des revendications précédentes, en présence éventuelle d'un solvant non aqueux, au moyen du catalyseur présent dans la formulation et par activation thermique pour former un polymère conducteur des ions lithium,
b) on évapore le solvant éventuel présent dans ledit polymère afin d'obtenir un électrolyte solide réticulé.

13. Procédé de préparation d'un électrolyte solide réticulé selon la revendication 12 dans lequel l'activation thermique est effectuée par chauffage de la formulation à une température comprise entre 50 et 80°C pendant une durée comprise entre 1 et 24 heures et préférentiellement entre 6 heures et 12 heures.

14. Procédé de préparation d'un électrolyte solide réticulé sous forme d'électrode selon la revendication 12 ou 13 dans lequel à l'étape a) on imprègne une électrode poreuse par la formulation d'électrolyte réticulable par enduction ou pulvérisation, puis on réticule la formulation enduite ou pulvérisée, ou on ajoute dans la formulation d'électrolyte réticulable à l'étape a) une matière active et un percolant électronique pour formuler une encre d'électrode qui est enduite, puis réticulée pour obtenir une électrode solide.

15. Utilisation de l'électrolyte réticulé obtenu par réticulation de la formulation selon l'une des revendications 1 à 11 ou obtenu par le procédé selon l'une des revendications 12 à 14 comme électrolyte solide de batterie Li-ion tout solide ou comme composant de l'électrode positive (posolyte ou catholyte) ou négative (négolyte ou anolyte) d'un système électrochimique.

## Patentansprüche

1. Vernetzbare Elektrolytformulierung, die zumindest Folgendes umfasst:
- ein Kohlenwasserstoffmolekül, das drei bis sechs, vorzugsweise vier, Thiolfunktionen aufweist;
- ein bifunktionelles Kettenverlängerungsmittel in Form einer Kohlenwasserstoffkette, die zwei C=C-Doppelbindungen trägt;
- ein monofunktionelles Einzelionen-Kettenabbruchmittel, das eine C=C-Doppelbindung aufweist und bewegliches Lithium umfasst;
- ein monofunktionelles Kettenabbruchmittel vom Polyethylenglycol- (PEG)-Typ;
- einen nucleophilen Katalysator vom Basentyp,
wobei das Stoffmengenverhältnis [C=C-Doppelbindungen]/[Thiole] 1 beträgt.

2. Vernetzbare Elektrolytformulierung nach Anspruch 1, die ein Lithiumsalz oder eine Mischung von Lithiumsalzen umfasst, das (die) in der Formulierung löslich ist (sind), und wobei die Menge an Lithiumsalz(en) zwischen 2 und 30 % Gew.-%, bezogen auf das Gesamtgewicht der Formulierung, vorzugsweise zwischen 5 und 15 % Gew.-%, bezogen auf das Gesamtgewicht der Formulierung, beträgt.

3. Vernetzbare Elektrolytformulierung nach einem der vorhergehenden Ansprüche, wobei der Katalysator aus 1,8-Diazobicyclo[5.4.0]undec-7-en, Dimethylphenylphosphin, Triphenylphosphin oder Triethylamin, Pyridin und Dimethylaminopyridin ausgewählt und vorzugsweise aus 1,8-Diazobicyclo[5.4.0]undec-7-en, Dimethylphenylphosphin, Triphenylphosphin oder Triethylamin, außerordentlich bevorzugt Triethylamin, ausgewählt ist.

4. Vernetzbare Elektrolytformulierung nach einem der vorhergehenden Ansprüche, wobei das 3 bis 6 Thiolfunktionen aufweisende Kohlenwasserstoffmolekül aus Pentaerythrittetrakis(3-mercaptopropionat), Trimethylolpropantris(3-mercaptopropionat), einem Poly(mercaptopropyl)methylsiloxan) oder einem (Mercaptopropyl)methylsiloxan)-co-dimethylsiloxan-Copolymer mit einer mittleren Funktionalität größer oder gleich 3 ausgewählt ist, vorzugsweise Pentaerythrittetrakis(3-mercaptopropionat) ist.

5. Vernetzbare Elektrolytformulierung nach einem der vorhergehenden Ansprüche, wobei das bifunktionelle Kettenverlängerungsmittel aus einer beliebigen zwei C=C-Doppelbindungen tragenden Oligo-Ethylenglycol-Einheit oder einer beliebigen Norbornen-, Vinylether-, Allylether-, Acrylat-, Methacrylat-, Alken-Einheit ausgewählt ist.

6. Vernetzbare Elektrolytformulierung nach Anspruch 5, wobei das bifunktionelle Kettenverlängerungsmittel aus Poly(ethylenglycol)- (PEG-)dimethacrylat, PEG-Diacrylat, PEG-Diallyl, PEG-Divinyl ausgewählt ist.

7. Vernetzbare Elektrolytformulierung nach einem der vorhergehenden Ansprüche, wobei es sich bei dem monofunktionellen Einzelionen-Kettenabbruchmittel um Lithium-3-((trifluormethan)sulfonamidosulfonyl)propylmethacrylat handelt.

8. Vernetzbare Elektrolytformulierung nach einem der vorhergehenden Ansprüche, wobei das monofunktionelle Polyethylenglycol-Kettenabbruchmittel aus Poly(ethylenglycol)methyletheracrylat, Poly(ethylenglycol)allylmethylether, Poly(ethylenglycol)vinylmethylether oder Poly(ethylenglycol)maleimidmethylether ausgewählt ist.

9. Vernetzbare Elektrolytformulierung nach einem der vorhergehenden Ansprüche, die den Katalysator in einer solchen Menge umfasst, dass das Stoffmengenverhältnis von Thiolfunktionen zum Katalysator zwischen 200 und 600 beträgt.

10. Vernetzbare Elektrolytformulierung nach einem der vorhergehenden Ansprüche, die ein zweites Kettenverlängerungsmittel der Dithiolfamilie umfasst, das vorzugsweise aus Polydimethylsiloxan- (PDMS-) oder Polyethylenglycol- (PEG-)Polymeren ausgewählt ist, die an beiden Enden mit Mercaptoethyl- oder Mercaptopropylfunktionen terminiert sind.

11. Vernetzbare Elektrolytformulierung nach einem der vorhergehenden Ansprüche, die einen Weichmacher umfasst, der aus den folgenden Verbindungen ausgewählt ist: einem Oligo-Ethylenglycol, Carbonatester, Succinonitril, einem aprotischen polaren Lösungsmittel oder einer aprotischen ionischen Flüssigkeit, wobei der Weichmacher 2 bis 30 Gew.-%, vorzugsweise 5 bis 15 Gew.-%, ausmacht, bezogen auf das Gesamtgewicht der Formulierung.

12. Verfahren zur Herstellung eines vernetzten Festelektrolyten, wobei:
a) die vernetzbare Elektrolytformulierung nach einem der vorhergehenden Ansprüche gegebenenfalls in Gegenwart eines nichtwässrigen Lösungsmittels mittels des in der Formulierung vorhandenen Katalysators und durch thermische Aktivierung vernetzt wird, wodurch ein Lithiumionen leitendes Polymer gebildet wird,
b) jegliches gegebenenfalls im Polymer vorhandene Lösungsmittel abgedampft wird, wodurch ein vernetzter Festelektrolyt erhalten wird.

13. Verfahren zur Herstellung eines vernetzten Festelektrolyten nach Anspruch 12, wobei die thermische Aktivierung durch Erwärmen der Formulierung auf eine Temperatur zwischen 50 und 80 °C für einen Zeitraum zwischen 1 und 24 Stunden und vorzugsweise zwischen 6 Stunden und 12 Stunden erfolgt.

14. Verfahren zur Herstellung eines vernetzten Festelektrolyten in Elektrodenform nach Anspruch 12 oder 13, wobei in Schritt a) eine poröse Elektrode mit der vernetzbaren Elektrolytformulierung durch Beschichten oder Sprühen getränkt wird und die aufgetragene oder aufgesprühte Formulierung anschließend vernetzt wird oder der vernetzbaren Elektrolytformulierung in Schritt a) ein aktives Material und ein elektronisches Perkolationsmittel zugesetzt werden, wodurch eine Elektrodentinte formuliert wird, die aufgetragen und anschließend vernetzt wird, wodurch eine feste Elektrode erhalten wird.

15. Verwendung des durch eine Vernetzung der Formulierung nach einem der Ansprüche 1 bis 11 erhaltenen oder durch das Verfahren nach einem der Ansprüche 12 bis 14 erhaltenen vernetzten Elektrolyten als Festelektrolyt einer Li-Ionen-Feststoff-Batterie oder als Bestandteil der positiven (Posolyt oder Katholyt) oder negativen Elektrode (Negiolyt oder Anolyt) eines elektrochemischen Systems.

## Claims

1. Crosslinkable electrolyte formulation comprising at least:
- a hydrocarbon molecule containing three to six thiol functions, preferably four;
- a bifunctional chain extender in the form of a hydrocarbon chain bearing two C=C double bonds;
- a monofunctional single-ion chain terminator containing a C=C double bond and comprising mobile lithium;
- a monofunctional polyethylene glycol (PEG) chain terminator;
- a nucleophilic base catalyst,
wherein the [C=C double bond]/[thiols] molar ratio is 1.

2. Crosslinkable electrolyte formulation according to Claim 1, which comprises a soluble lithium salt or a mixture of soluble lithium salts in the formulation and wherein the amount of lithium salt(s) represents between 2% and 30% by weight, relative to the total formulation weight, preferably between 5% and 15% by weight, relative to the total formulation weight.

3. Crosslinkable electrolyte formulation according to either of the preceding claims, wherein the catalyst is chosen from 1,8-diazabicyclo[5.4.0]undec-7-ene, dimethylphenylphosphine, triphenylphosphine or triethylamine, pyridine and dimethylaminopyridine and preferably chosen from 1,8-diazabicyclo[5.4.0]undec-7-ene, dimethylphenylphosphine, triphenylphosphine or triethylamine, very preferably triethylamine.

4. Crosslinkable electrolyte formulation according to one of the preceding claims, wherein the hydrocarbon molecule containing 3 to 6 thiol functions is chosen from pentaerythritol tetrakis(3-mercaptopropionate), trimethylolpropane tris(3-mercaptopropionate), a poly[(mercaptopropyl)methylsiloxane] or a (mercaptopropyl)methylsiloxane-co-dimethylsiloxane copolymer with an average functionality of greater than or equal to 3, preferably is pentaerythritol tetrakis(3-mercaptopropionate).

5. Crosslinkable electrolyte formulation according to one of the preceding claims, wherein the bifunctional chain extender is chosen from any oligoethylene glycol unit bearing two C=C double bonds or any norbornene, vinyl ether, allyl ether, acrylate, methacrylate or alkene unit.

6. Crosslinkable electrolyte formulation according to Claim 5 wherein the bifunctional chain extender is chosen from poly(ethylene glycol) ( PEG)dimethacrylate, PEG diacrylate, PEG diallyl, PEG divinyl.

7. Crosslinkable electrolyte formulation according to one of the preceding claims, wherein the monofunctional single-ion chain terminator is lithium 3-[(trifluoromethane)sulfonamidosulfonyl]propyl methacrylate.

8. Crosslinkable electrolyte formulation according to one of the preceding claims, wherein the monofunctional polyethylene glycol chain terminator is chosen from poly(ethylene glycol) methyl ether acrylate, poly(ethylene glycol) allyl methyl ether, poly(ethylene glycol) vinyl methyl ether or poly(ethylene glycol) maleimide methyl ether.

9. Crosslinkable electrolyte formulation according to one of the preceding claims, comprising the catalyst in an amount such that the molar ratio of thiol functions to catalyst is between 200 and 600.

10. Crosslinkable electrolyte formulation according to one of the preceding claims, comprising a second chain extender of the dithiol family, preferably chosen from polydimethylsiloxane (PDMS) or polyethylene glycol (PEG) polymers terminated with mercaptoethyl or mercaptopropyl functions at both ends.

11. Crosslinkable electrolyte formulation according to one of the preceding claims, comprising a plasticizer chosen from the following compounds: oligoethylene glycol, carbonate ester, succinonitrile, polar aprotic solvent or aprotic ionic liquid, said plasticizer representing from 2% to 30%, preferably from 5% to 15% by weight, relative to the total formulation weight.

12. Process for preparing a crosslinked solid electrolyte, wherein:
a) the crosslinkable electrolyte formulation according to one of the preceding claims is crosslinked, in the optional presence of a nonaqueous solvent, by means of the catalyst present in the formulation and by thermal activation, in order to form a polymer which conducts lithium ions,
b) the optional solvent present in said polymer is evaporated in order to obtain a crosslinked solid electrolyte.

13. Process for preparing a crosslinked solid electrolyte according to Claim 12, wherein the thermal activation is carried out by heating the formulation at a temperature of between 50°C and 80°C for a period of between 1 and 24 hours and preferentially between 6 hours and 12 hours.

14. Process for preparing a crosslinked solid electrolyte in electrode form according to Claim 12 or 13, wherein in step a) a porous electrode is impregnated with the crosslinkable electrolyte formulation by coating or spraying, and then the coated or sprayed formulation is crosslinked, or an active material and an electronic percolant are added to the crosslinkable electrolyte formulation in step a) to formulate an electrode ink which is coated and then crosslinked to obtain a solid electrode.

15. Use of the crosslinked electrolyte obtained by crosslinking of the formulation according to one of Claims 1 to 11 or obtained by the process according to one of Claims 12 to 14 as solid electrolyte of an all-solid-state Li-ion battery or as component of the positive electrode (posolyte or catholyte) or of the negative electrode (negolyte or anolyte) of an electrochemical system.
